# EUROPÄISCHE PATENTSCHRIFT

(11) **EP 3 000 303 B1**
(45) Veröffentlichungstag und Bekanntmachung des Hinweises auf die Patenterteilung: **10.05.2023**
(21) Anmeldenummer: 15175594.9
(22) Anmeldetag: 07.07.2015
(51) Int. Cl.: A01D 41/12

(54) **MÄHDRESCHER MIT FAHRERASSISTENZSYSTEM**
COMBINE HARVESTER WITH DRIVER ASSISTANCE SYSTEM
MOISSONNEUSE-BATTEUSE DOTE D'UN SYSTEME D'ASSISTANCE DU CONDUCTEUR

(30) Priorität: 26.09.2014 DE 102014113965
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Baumgarten, Joachim, 48361 Beelen (DE); Wilken, Andreas, 49143 Bissendorf (DE); Heitmann, Christoph, 48231 Warendorf (DE); Brinkmann, Jörn, 33428 Harsewinkel (DE); Vieregge, Christopher, 32694 Dörentrup (DE)
(74) Vertreter: CLAAS Gruppe

(56) Entgegenhaltungen:
- EP-A1- 0 685 151
- EP-A1- 1 790 207
- EP-A2- 1 514 466
- WO-A1-02/34029
- WO-A1-2014/118239
- DE-A1-102007 005 173

## Beschreibung

Die Erfindung betrifft einen Mähdrescher mit einem die Verteilung eines aus dem Mähdrescher austretenden Gutstranges auf dem Boden regelnden Fahrerassistenzsystem nach dem Oberbegriff des Anspruchs 1. Ein derartiger Mähdrescher ist z.B. aus WO 2014/118239 A1 bekannt.

Häufig werden die von einem Mähdrescher während des Erntevorganges geernteten Nichtkornbestandteile, etwa zur Verbesserung der Bodenqualität, unmittelbar auf dem abgeernteten Territorium verteilt. Dabei ist wichtig, dass das verteilte Gut so beschaffen ist, dass es leicht verrottet, damit dessen Nährstoffanteile in der folgenden Vegetationsphase verfügbar sind. Eine optimale Verrottung wird dann erreicht, wenn das auf dem Boden verteilte Gut entsprechend kurzstückig ist und homogen über der Arbeitsbreite des Mähdreschers verteilt wird.

Aus dem Stand der Technik sind vielfältige Lösungen bekannt geworden, die diese Anforderungen erfüllen sollen. Beispielweise offenbart die EP 0 685 151 ein System, bei dem die Windverhältnisse im Bereich der Gutverteileinrichtung des Mähdreschers ermittelt werden und das Abgabeverhalten der Verteileinrichtung nach den Windverhältnissen geregelt wird. Ein solches System hat den Vorteil, dass eine seitenwindbedingte ungleichförmige Verteilung des aus dem Mähdrescher herausgeförderten Kurzstroh-Spreu-Gemisches vermieden, zumindest jedoch reduziert wird.

Aus der EP 1 790 207 ist ein System bekannt geworden, bei dem die Verteilung des im rückwärtigen Bereich aus dem Mähdrescher austretenden Gutstranges in Abhängigkeit von der Lage der Bestandskante geregelt wird. Ein derartiges System stellt sicher, dass der auf dem Boden zu verteilende Restmaterialanteil nicht in einen noch zu erntenden Bestand abgegeben wird, da dies den Nachteil hätte, dass bereits ausgedroschenes Gut ein weiteres Mal von einem Mähdrescher aufgenommen werden würde.

Schließlich sei beispielhaft noch auf die EP 1 514 466 verwiesen. Dort ist ein Mähdrescher mit Häcksel- und Verteileinrichtung offenbart, der in seinem rückwärtigen Bereich eine Infrarotkamera aufnimmt, die die Verteilgüte des auf dem Boden abgelegten Kurzstroh-Spreu-Gemisches anhand der detektierten Temperaturverteilung sensiert, wobei höhere Temperaturen ein Indikator für eine größere Schichthöhe sind. Basierend auf der ermittelten Temperaturänderung werden kinematische Parameter der Gutzerkleinerungs- und -verteileinrichtung in der Weise angepasst, dass sich eine annährend gleiche Temperaturverteilung über der Verteilbreite einstellt, was letztlich einen Indikator für eine homogene Gutverteilung bildet.

All den beschriebenen Systemen haftet der Nachteil an, dass sie in der Regel immer nur einen definierten Parameter zur Bestimmung der Verteilgüte auswerten. Komplexe Zusammenhänge zwischen verschiedensten, die Homogenität der Gutverteilung beeinflussenden Parametern können derartig System nicht erfassen.

Es ist deshalb Aufgabe der Erfindung die beschriebenen Nachteile des Standes der Technik zu vermeiden und insbesondere ein Fahrerassistenzsystem vorzuschlagen, dass die die Gutverteilung auf dem Boden beeinflussenden komplexen Zusammenhänge zwischen verschiedensten Parametern besser erfasst und berücksichtigt.

Diese Aufgabe wird erfindungsgemäß durch die kennzeichnenden Merkmale des Anspruchs 1 gelöst.

Indem ein Mähdrescher mit einem die Verteilung eines aus dem Mähdrescher austretenden Gutstranges auf dem Boden regelnden Fahrerassistenzsystem ausgestattet ist, in welchem zur Regelung der Verteilung des Gutstranges Verteilstrategien auswählbar hinterlegt sind, wird sichergestellt, dass die die Gutverteilung auf dem Boden beeinflussenden komplexen Zusammenhänge zwischen verschiedensten Parametern besser erfasst und berücksichtigt werden.

Eine qualitativ hochwertige und effiziente Gutverteilung wird dann erzielt, wenn in einer vorteilhaften Ausgestaltung der Erfindung die auswählbaren Verteilstrategien zumindest eine oder mehrere der Verteilstrategien "gleichmäßige Gutverteilung", "Häckselqualität" und "Energieeffizienz" umfassen. In diesem Zusammenhang bewirkt die Verteilstrategie "gleichmäßige Gutverteilung" eine Optimierung der Verteilung des Gutstranges auf dem Boden. Die Verteilstrategie "Häckselqualität" führt zu eine Optimierung der Zerkleinerung des Gutstranges in der Zerkleinerungseinrichtung, während die Verteilstrategie "Energieeffizienz" eine Optimierung des Energiebedarfs für die Zerkleinerung und Verteilung des Gutstranges sicherstellt.

Eine vorteilhafte Weiterbildung der Erfindung wird dann erreicht, wenn eine Verteilstrategie oder eine Kombination aus mehreren Verteilstrategien vom Fahrer des Mähdreschers ausgewählt oder vom Fahrerassistenzsystem vorgeschlagen werden kann. Dies bewirkt im Wesentlichen, dass die Optimierungspotentiale der einzelnen Verteilstrategien synergetisch zusammengeführt werden können.

Eine umso hochwertigere Optimierung der Gutzerkleinerung- und -verteilung wird sich dann einstellen, wenn in einer weiteren vorteilhaften Ausgestaltung jede der Verteilstrategien eine Vielzahl der in dem Fahrerassistenzsystem zugänglichen Informationen berücksichtigt, wobei diese Informationen zumindest die Informationen "Durchsatzparameter", "Material- oder Wurfeigenschaften", "Maschinenparameter" und "Umgebungsbedingungen" umfassen.

Durchsatzbezogen wird eine hinreichend gute Optimierung der Gutstrangzerkleinerung und -verteilung dadurch sichergestellt, dass die Information "Durchsatzparameter" einen oder mehrere der durchsatzrelevanten Parameter Korndurchsatz, Schichthöhe in einem dem Mähdrescher zugeordneten Schrägförderer, Antriebsmotorauslastung, Antriebsleistungsbedarf der Zerkleinerungseinrichtung, Antriebsleistungsbedarf der Verteileinrichtungen und/oder Quer- und Längsverteilung des Gutstrangs in der Zerkleinerungseinrichtung umfasst. Indem in einer vorteilhaften Ausgestaltung der Erfindung die Information "Material- und Wurfeigenschaften" einen oder mehrere der wurfeigenschaftsrelevanten Parameter Strohfeuchte, Häcksellänge, Aufspleißung, Gutdichte, Zähigkeit und Fruchtart berücksichtigt, wird die Homogenität der Gutverteilung weiter verbessert.

In einer vorteilhaften Weiterbildung kann hochflexibel der für die Zerkleinerung eines Gutstranges erforderliche Energiebedarf an die Verrottungseignung des zu zerkleinernden Gutstranges angepasst werden, wenn in einer weiteren vorteilhaften Ausgestaltung die Zerkleinerungseinrichtung als Strohhäcksler ausgeführt ist und der Gutstrang im Strohhäcksler im Zusammenwirken von umlaufenden Häckselmessern mit ortsfesten Gegenmessern, zumindest einer Gegenschneide und einer oder mehreren Reibleisten zerkleinert wird und die Information "Maschinenparameter" einen oder mehrere der maschinenrelevanten Parameter Anzahl und Position der Reibleisten, der Gegenmesser, der Gegenschneiden sowie Verschleißparameter der Häckselmesser und Drehzahlparameter der Häckslerwelle umfasst.

Eine vorteilhafte Ausgestaltung der Erfindung ergibt sich auch dann, wenn die den Gutstrang auf dem Boden verteilende Verteileinrichtung als Radialverteiler ausgebildet ist und zumindest auslenkbare Streubleche und ein oder mehrere Wurfgebläse umfasst und die Information "Maschinenparameter" einen oder mehrere der maschinenrelevanten Parameter Auslenkung, Pendelfrequenz und Verteilkurve der Streubleche, Drehzahlparameter der Wurfgebläse und vorgeschalteter umlaufender Arbeitsorgane des Mähdreschers umfasst. Auf diese Weise wird es möglich die Gutverteilung auf dem Boden flexibel an sich ändernde Guteigenschaften oder sich ändernde Umgebungsbedingungen, wie Hangneigung und Windverhältnisse, anzupassen. In diesem Zusammenhang hat es sich von Vorteil erwiesen, wenn die Information "Umgebungsbedingungen" Luftfeuchte- und Lufttemperaturparameter, Windparameter und Hangneigungsparameter umfasst.

Indem die den Gutstrang auf dem Boden verteilende Verteileinrichtung als Spreuwurfgebläse oder Spreuverteiler ausgebildet ist und der maschinenrelevante Parameter zumindest die Drehzahl der dem Spreuwurfgebläse oder dem Spreuverteiler zugeordneten Wurfgebläse ist wird außerdem sichergestellt, dass die aus der Reinigungseinrichtung austretende Spreu entweder unmittelbar auf dem Boden verteilt oder zielgerichtet an eine weitere Verteileinrichtung, beispielsweise einen Radialverteiler, übergeben werden kann.

Eine weitere Verbesserung der Gutverteilung auf dem Boden kann auch dadurch bewirkt werden, dass die den Gutstrang auf dem Boden verteilende Verteileinrichtung als mit Gutleitschienen besetzte Auswurfhaube ausgebildet ist und der maschinenrelevante Parameter zumindest die Ausrichtung der Gutleitschienen umfasst.

In einer erfindungsgemäßen Ausgestaltung der Erfindung wird eine besonders effiziente Optimierung der Gutzerkleinerung und -verteilung dann erreicht, wenn das Fahrerassistenzsystem die jeweilige Verteilstrategie unter Berücksichtigung der verfügbaren Informationen und in der Recheneinheit hinterlegter Kennlinien abarbeitet und eine Optimierung der Qualitätskriterien Gutverteilung, Häckselqualität und Energiebedarf bewirkt.

Eine Beurteilung der Optimierungseffizienz wird in einer vorteilhaften Weiterbildung der Erfindung dann sichergestellt, wenn in einem Ergebnismenüschritt das durch die jeweilige Verteilstrategie optimierte Qualitätskriterium überprüft wird, wobei die Überprüfung entweder direkt und indirekt erfolgt.

Eine hinreichend gute Bewertung des Optimierungsergebnisses der Verteilstrategie "gleichmäßige Gutverteilung" wird durch dessen direkte oder indirekte Erfassung erreicht, wobei die direkte Erfassung durch Sensierung der Verteilung des aus dem Mähdrescher austretenden Gutstranges auf dem Boden und die indirekte Erfassung durch Abarbeitung in der Recheneinheit hinterlegter Kennlinienfeldern erfolgt. In analoger Weise und zum selben Zweck kann das Fahrerassistenzsystem das Ergebnis der Verteilstrategie "Häckselqualität" direkt oder indirekt erfassen, wobei die direkte Erfassung durch Gutstromdetektion und die indirekte Erfassung durch Abarbeitung eines in der Recheneinheit hinterlegten Häckselqualitätsmodells erfolgt. Zudem wird die hinreichende gute Bewertung des Ergebnisses der Verteilstrategie "Energieeffizienz" durch direkte oder indirekte Erfassung ermittelt, wobei die direkte Erfassung durch Drehmoment- und/oder Drehzahl- und/oder Motorauslastungsmessung und die indirekte Erfassung durch Abarbeitung eines in der Recheneinheit hinterlegten Energieeffizienzmodells erfolgt.

Wegen des konträren Zusammenhangs zwischen Häckselqualität und Energiebedarf ist in einer weiteren vorteilhaften Ausgestaltung der Erfindung vorgesehen, dass die in dem Fahrerassistenzsystem hinterlegten Verteilstrategien "Häckselqualität" und "Energieeffizienz" miteinander kombinier- und bilanzierbar sind. Dies hat insbesondere den Effekt, dass die Häcksellänge unter Berücksichtigung der Guteigenschaften nur so kurz gewählt wird, wie für eine hinreichend gute Verrottung erforderlich ist, was letztlich zu einer Minimierung des Energiebedarfs führt.

Die Optimierung der einander beeinflussenden Qualitätskriterien Häckselqualität und Energiebedarf kann in einer vorteilhaften Weiterbildung der Erfindung auch dadurch noch verbessert werden, wenn der Bediener des Mähdreschers Grenzwerte für Häckselqualität und Energiebedarf definieren und die Priorisierung einer der Verteilstrategien "Häckselqualität" und "Energieeffizienz" oder eine Änderung der Gewichtung dieser Verteilstrategien vornehmen kann.

Letztlich wird die Effizienz des erfindungsgemäßen Fahrerassistenzsystems auch dadurch noch gesteigert, dass das Fahrerassistenzsystem aus den Vorgaben des Fahrers und den hinterlegten Kennlinien eine Änderung der Maschinenparameter ermittelt und unmittelbar die ermittelte Änderung der Maschinenparameter bewirkt.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: die Seitenansicht einer als Mähdrescher ausgeführten landwirtschaftlichen Arbeitsmaschine
- Figur 2: eine Detailansicht nach Figur 1, einen Strohhäcksler mit Radialverteiler und ein Spreuwurfgebläse umfassend
- Figur 3: eine Detailansicht nach Figur 1, eine Auswurfhaube und einen Spreuverteiler umfassend
- Figur 4: eine schematische Ansicht des erfindungsgemäßen Fahrerassistenzsystems
- Figur 5: eine weitere schematische Ansicht des erfindungsgemäßen Fahrerassistenzsystems nach Figur 4

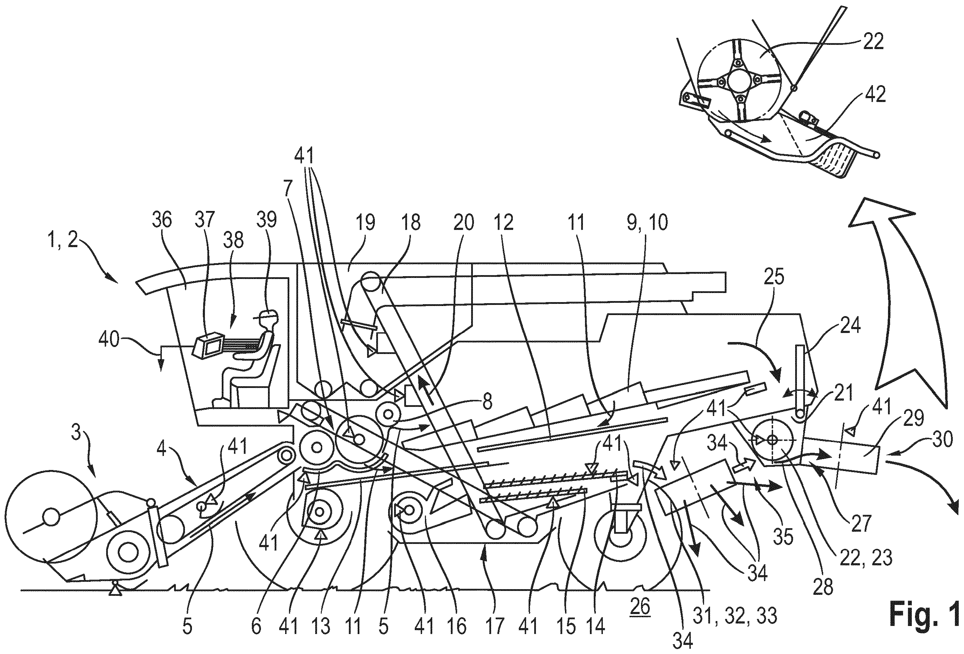

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Hordenschüttler 9 ausgeführte Trenneinrichtung 10 übergeben wird. Es liegt im Rahmen der Erfindung, dass die Trenneinrichtung 10 auch als an sich bekannter und deshalb nicht dargestellter Trennrotor ausgeführt sein kann. Auf dem rotierenden Hordenschüttler 9 wird der Gutstrom 5 so gefördert, dass in dem Gutstrom 5 enthaltene freibewegliche Körner 11 im untenseitigen Bereich des Hordenschüttlers 9 abgeschieden werden. Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom 20 wird schließlich mittels Elevatoren 18 an einen Korntank 19 übergeben.

Im rückwärtigen Bereich der als Hordenschüttler 9 ausgeführten Trenneinrichtung 10 ist dieser eine von einem trichterförmigen Gehäuse 21 ummantelte, als Strohhäcksler 22 ausgeführte, und im Folgenden noch näher zu beschreibende Zerkleinerungseinrichtung 23 zugeordnet. Dem Strohhäcksler 22 wird obenseitig das den Hordenschüttler 9 im rückwärtigen Bereich verlassende Stroh 25 zugeführt.

Mittels einer verschwenkbaren Strohleitklappe 24 kann das den Hordenschüttler 9 verlassende Stroh 25 auch so umgelenkt werden, dass es direkt auf dem Boden 26 in einem Schwad abgelegt wird. Im Austrittsbereich 27 des Strohhäckslers 22 wird der aus dem zerkleinerten Stroh 25 bestehende Gutstrang 28 an einen sogenannten Radialverteiler 29 übergeben, der in noch näher zu beschreibender Weise in seinem Austrittsbereich 30 den Gutstrang 28 so abgibt, dass es zu einer Breitverteilung des Gutstranges 28 auf dem Boden 26 kommt.

Im dargestellten Ausführungsbeispiel ist der Reinigungseinrichtung 17 in ihrem rückwärtigen Bereich eine Spreufördereinrichtung 31 zugeordnet, die in noch näher zu beschreibender Weise entweder als Spreuwurfgebläse 32 oder Spreuverteiler 33 ausgebildet ist. Die aus der Reinigungseinrichtung 17 austretende Spreu 34 wird obenseitig der Spreufördereinrichtung 31 zugeführt. Soll das Stroh 25 zwecks Zerkleinerung an den Strohhäcksler 22 übergeben und mittels des Radialverteilers 29 auf dem Boden 26 verteilt, dann ist die Spreufördereinrichtung 31 als Spreuwurfgebläse 32 ausgeführt. In diesem Fall wird die von dem Spreuwurfgebläse 32 geförderte Spreu 34 in dessen rückwärtigen Bereich 35 unmittelbar an den Radialverteiler 29 übergeben, wobei dieser das zerkleinerte Stroh 25 und die Spreu 34 in einem einzigen Gutstrang 28 auf dem Boden 26 verteilt. Wird das Stroh 25 als Schwad auf dem Boden 26 abgelegt, sind Strohhäcksler 22 und Radialverteiler 29 außer Betrieb. In diesem Fall ist die Spreufördereinrichtung 31 als Spreuverteiler 33 ausgebildet, die in Analogie zum Radialverteiler 29 die Spreu 34 flächig auf dem Boden 26 verteilt. Die Spreufördereinrichtung 31 ist auch als Spreuverteiler 33 ausgeführt, wenn dem Strohhäcksler 22 anstelle des Radialverteilers 29 eine noch näher zu beschreibende Auswurfhaube 42 zur Verteilung des Gutstranges 28 auf dem Boden 26 zugeordnet ist.

Weiter verfügt die landwirtschaftliche Arbeitsmaschine 1 über eine Fahrzeugkabine 36 in der zumindest eine mit einer Anzeigeeinheit 37 versehene Steuer- und Regeleinrichtung 38 angeordnet ist, mittels derer automatisch oder vom Bediener 39 der landwirtschaftlichen Arbeitsmaschine 1 initiiert eine Vielzahl von noch näher zu beschreibenden Prozessen gesteuert werden können. Die Steuer- und Regeleinrichtung 38 kommuniziert über ein sogenanntes Bussystem 40 in an sich bekannter Weise mit einer Vielzahl von Sensorsystemen 41. Einzelheiten bezüglich der Struktur der Sensorsysteme 41 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 41 nicht nochmals beschrieben wird.

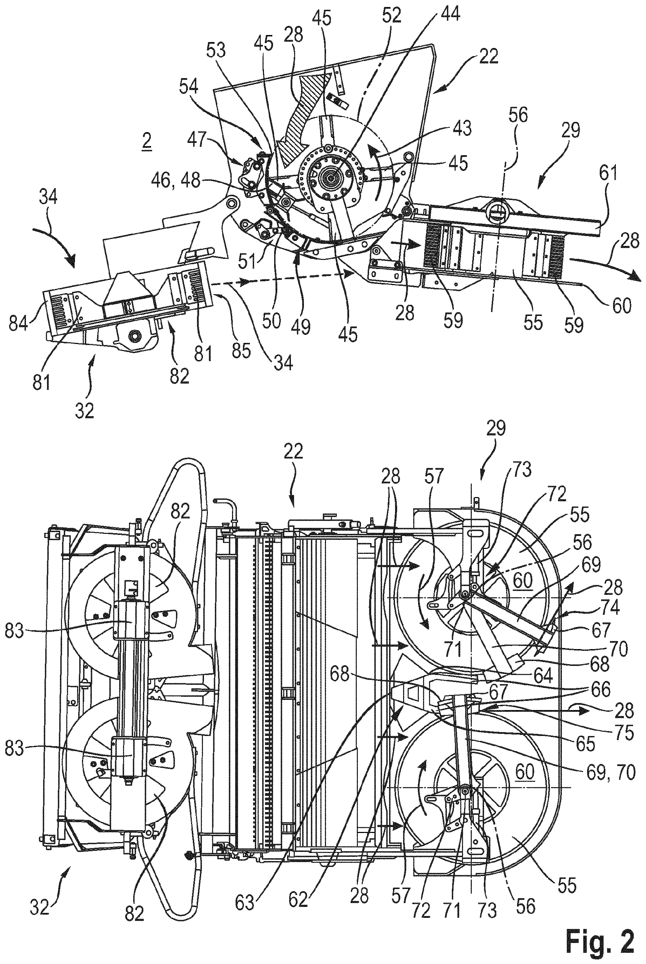

Figur 2 beschreibt konstruktive Details der Kombination Strohhäcksler 22 - Radialverteiler 29 in Seitenansicht und eine Ansicht von unten. Die in Pfeilrichtung 43 umlaufende Häckslerwelle 44 nimmt im dargestellten Ausführungsbeispiel vier über ihren Umfang verteilt angeordnete Reihen von freibeweglichen Häckselmessern 45 auf. Im rückwärtigen Bereich des Strohhäckslers 22 kämmen die Häckselmesser 45 mit zumindest einem im nicht näher beschriebenen Rahmen des Mähdreschers 2 gelagerten Messerkamm 46, wobei der Messerkamm 46 über Stellmittel 47 so geschwenkt werden kann, dass die Gegenmesser 48 des Messerkamms 46 weiter in den Wirkbereich der Häckselmesser 45 hinein- oder aus diesem herausgeschwenkt werden können. Mittels der Änderung der Position des oder der Messerkämme 46 kann auf die sich einstellende Häcksellänge in der Weise Einfluss genommen werden, dass mit zunehmendem Eingriff der Gegenmesser 48 die Zerkleinerung des Gutstrangs 28 zunimmt. Zudem nimmt die die umlaufenden Häckselmesser 45 ummantelnde Häckslerwandung 49 eine Reibleiste 50 auf, die mittels Stellmitteln 51 weiter an den Umfangskreis 52 der Häckselmesser 45 heran- oder von diesem wegbewegt werden kann. Die Reibleiste 50 hat die Funktion, die Geschwindigkeit des den Strohhäcksler 22 durchlaufenden Gutstrangs 28 abzubremsen, sodass sich die Verweilzeit des Gutstranges 28 im Strohhäcksler 22 und damit der Grad seiner Zerkleinerung erhöht. Zudem nimmt die Häckslerwandung 49 eine Gegenschneide 53 auf, die ebenfalls mittels geeigneter Stellmittel 54 weiter an den Umfangskreis 52 der Häckselmesser 45 heran- oder von diesem wegbewegt werden kann, wobei die Gegenschneide 53 den Effekt hat, dass sie die Aufspleißung der Partikel des Gutstranges 28 mit abnehmender Distanz zum Umfangskreis 52 der Häckselmesser 45 erhöht.

Der dem Strohhäcksler 22 nachgeordnete Radialverteiler 29 besteht aus zwei nebeneinander angeordneten Wurfgebläsen 55, die um vertikale Rotationsachsen 56 gemäß den Pfeilrichtungen 57, 58 zueinander gegenläufig umlaufen und den vom Strohhäcksler 22 zerkleinerten Gutstrang 28 aus dem Mähdrescher 2 austragen und in noch näher zu beschreibender Weise auf dem Boden 26 verteilen. Die Rotationsachsen 56 sind mit flexiblen Wurfschaufeln 59 besetzt, die nach unten von einer mitrotierenden Scheibe 60 abgedeckt sind und obenseitig von Abdeckblechen 61 verschlossen werden. Den beiden aus dem oberen Abdeckblechen 61, den Rotationsachsen 56, den Wurfschaufeln 59 und den mitrotierenden Scheiben 60 gebildeten Wurfgebläsen 55 ist ein Guttrennblech 62 zugeordnet, dessen Spitze 63 gegen den von dem Strohhäcksler 22 ausgestoßenen Gutstrang 28 gerichtet ist, sodass dieser auf die Wurfgebläse 55 verteilt wird. Die divergierenden Schenkel 64, 65 des Guttrennbleches 62 bilden zudem mit ihren auslaufenden Enden die feststehenden Teilummantelungen 66 für die Wurfgebläse 55. Zudem verfügt jedes Wurfgebläse 55 über erste und zweite bewegliche Wandungsteile, sogenannte Streubleche 67, 68, die über Winkelhebel 69, 70 um Drehachsen 71 umlaufend in der Weise angetrieben sind, dass das außenliegende Streublech 67 dem innenliegenden Streublech 68 vorausläuft. Die beweglichen Streubleche 67, 68 werden jeweils über mit einem Koppelmechanismus 72 in Wirkverbindung stehende Hubzylinder 73 in der Weise angetrieben, dass das vorauseilende Streublech 67 mit höherer Geschwindigkeit als das nachlaufende innenliegende Streublech 68 umläuft. Das vordere Ende der vorauslaufenden Streubleche 67 bildet die sogenannte Abrisskante 74, 75 über die der Gutstrang 28 aus dem jeweiligen Radialgebläse 55 austritt. Über die Bewegung der Winkelhebel 69, 70 wird die Drehbewegung der Abrisskanten 74, 75 so gesteuert, dass deren Schwenkgeschwindigkeit mit zunehmendem Abstand der Abrisskanten 74, 75 zu dem jeweils benachbarten Wurfgebläse 55 abnimmt. Dies hat den Effekt, dass die Abrisskanten 74, 75 in ihrem Überlappungsbereich kürze und in den Außenbereichen längere Verweilzeiten aufweisen, sodass der an den Abrisskanten 74, 75 austretende Gutstrang 28 eine homogeneren Verteilung auf dem Boden 26 sicherstellt. Zudem kann der Schwenkbereich der Abrisskanten 74, 75 und damit die Verteilbreite des Radialverteilers 29 einstellbar sein. In dem dem Radialverteiler 29 abgewandten untenseitigen Bereich des Strohhäckslers 22 ist diesem das Spreuwurfgebläse 32 zugeordnet. Das Spreuwurfgebläse 32 nimmt in seinem Inneren ein mit Förderelementen 81 versehenes Wurfgebläse 82 auf, das um eine vertikale Achse 83 umlaufend angetrieben ist. Die Verkleidung 84 des Spreuwurfgebläses 32 ist so beschaffen, dass sie eine in Richtung des Radialverteilers 29 weisende Öffnung 85 aufweist über die die von der Reinigungseinrichtung 17 abgegebene Spreu 34 in den in den Radialverteiler 29 eintretenden Gutstrang 28 gefördert wird. Es liegt im Rahmen der Erfindung, dass das Spreuwurfgebläse 32 über zumindest paarweise angeordnete umlaufende Wurfgebläse 82 verfügt.

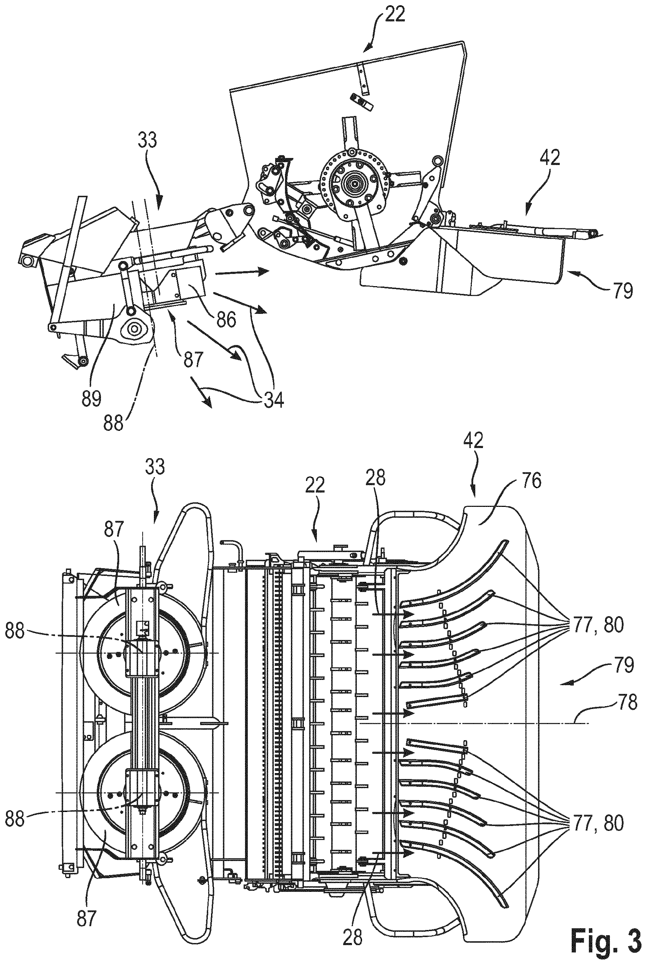

Figur 3 beschreibt konstruktive Details der Kombination Strohhäcksler 22 - Strohauswurfhaube 42 in Seitenansicht und Ansicht von unten. Da der Strohhäcksler 22 dem nach Figur 2 entspricht werden hier nur Details der Strohauswurfhaube 42 und des Spreuverteilers 33 beschrieben. Im Wesentlichen wird die Strohauswurfhaube 42 von einer eine obenseitige und seitliche Begrenzung bildenden Verkleidungshaube 76 gebildet, der innenliegend eine Vielzahl von Gutleitschienen 77 zugeordnet sind. Die Gutleitschienen 77 haben in Bezug auf einen Mittenbereich 78 rechts- und linksseitige Ausrichtungen, sodass der in die Strohauswurfhaube 42 eintretende Gutstrang 28 rechts- oder linksgerichtet den Austrittsbereich 79 der Strohauswurfhaube 42 verlässt. Die Gutleitschienen 77 können entweder von ebenen oder in ihrer Krümmung änderbaren Stegblechen 80 gebildet werden. Zudem kann die Ausrichtung der Gutleitschienen 77 in der Verkleidungshaube 76 angepasst werden, sodass deren Querförderwirkung entweder erhöht oder reduziert wird. In dem der Strohausfallhaube 42 abgewandten untenseitigen Bereich des Strohhäckslers 22 ist diesem ein Spreuverteiler 33 zugeordnet. Der Spreuverteiler 33 nimmt in seinem Inneren ein mit Förderelementen 86 versehenes Wurfgebläse 87 auf, das um eine vertikale Achse 88 umlaufend angetrieben ist. Die Verkleidung 89 des Spreuverteilers 33 ist so beschaffen, dass die von der Reinigungseinrichtung 17 abgegebene Spreu 34 unmittelbar auf dem Boden 26 verteilt wird. Es liegt im Rahmen der Erfindung, dass der Spreuverteiler 33 über zumindest paarweise angeordnete umlaufende Wurfgebläse 87 verfügt.

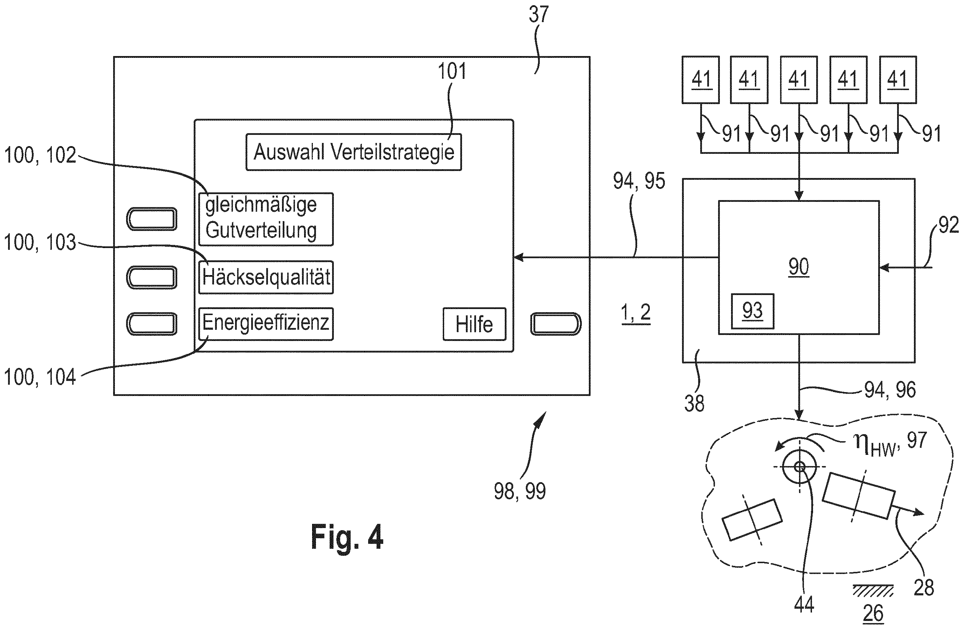

Fig. 4 zeigt eine schematische Darstellung der Anzeigeeinheit 37, der Steuer- und Regeleinrichtung 38 sowie eine der Steuer- und Regeleinrichtung 38 zugeordnete und mit der Anzeigeeinheit 37 gekoppelte Recheneinheit 90. Die Recheneinheit 90 ist so beschaffen, dass sie neben den von den Sensorsystemen 41 generierten Informationen 91, externe Informationen 92 und in der Recheneinheit 90 selbst hinterlegte Informationen 93, wie etwa Expertenwissen, zu einer Vielzahl von Ausgangssignalen 94 verarbeiten kann. Die Ausgangssignale 94 sind dabei so beschaffen, dass sie zumindest Anzeigesteuersignale 95 und Arbeitsorgansteuersignale 96 umfassen. Erstere bestimmen die Inhalte der Anzeigeeinheit 37 und letztere bewirken in erfindungsgemäßer Weise die Änderung der unterschiedlichsten Arbeitsorganparameter 97 der landwirtschaftlichen Arbeitsmaschine 1, wie beispielsweise die Drehzahl n_{HW} der Häckslerwelle 44, mit dem Ziel, eine homogene Verteilung des aus dem Mähdrescher 2 austretenden Gutstrangs 28 auf dem Boden 26 zu erreichen. Die Steuer- und Regeleinrichtung 38 mit der ihr zugeordneten Anzeigeeinheit 37 und der Recheneinheit 90 sind Bestandteil des erfindungsgemäßen Fahrerassistenzsystems 98. Das Fahrerassistenzsystem 98 ist als sogenannter Häcksel- und Verteilautomat 99 ausgeführt, der die Verteilung des Gutstranges 28 auf dem Boden 26 optimiert.

Erfindungsgemäß ist das Fahrerassistenzsystem 98 so ausgeführt, dass es zur Regelung der Verteilung des aus dem Mähdrescher 2 austretenden Gutstranges 28 auswähl- und editierbare Verteilstrategien 100 umfasst, die in einem ersten Menüschritt 101 von dem Bediener 39 der landwirtschaftlichen Arbeitsmaschine 1 auswählbar sind.

Eine besonders effiziente Optimierung der Verteilung wird dann erreicht, wenn die auswählbaren Verteilstrategien 100 zumindest eine oder mehrere der Verteilstrategien "gleichmäßige Gutverteilung" 102, "Häckselqualität" 103 und "Energieeffizienz" 104 umfassen. Die Verteilstrategie "gleichmäßige Gutverteilung" 102 bewirkt dabei eine Optimierung der Verteilung des Gutstranges 28 auf dem Boden 25. Die Verteilstrategie "Häckselqualität" 103 führt zu einer Optimierung der Zerkleinerung des Gutstranges 28 in der Zerkleinerungseinrichtung 23, während die Verteilstrategie "Energieeffizienz" 104 eine Optimierung des Energiebedarfs für die Zerkleinerung und Verteilung des Gutstranges 28 bewirkt.

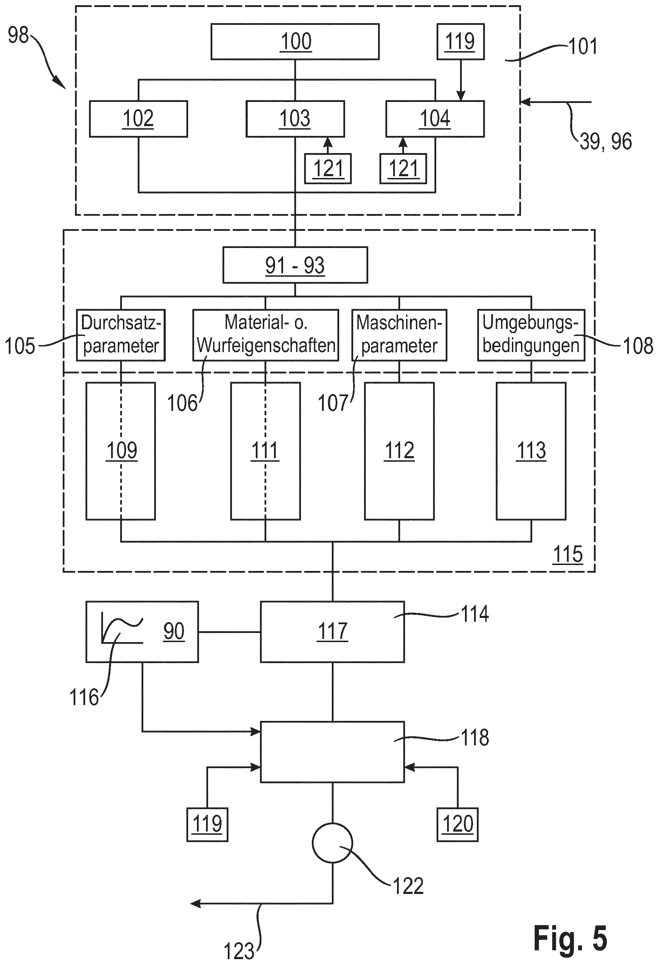

In Figur 5 sind Details der erfindungsgemäßen Verteilstrategien 100 schematisch beschrieben. In einem ersten Menüschritt 101 wird eine Verteilstrategie 102-104 oder eine Kombination aus mehreren Verteilstrategien 102-104 vom Fahrer 39 des Mähdreschers 2 ausgewählt oder vom Fahrerassistenzsystem 98 vorgeschlagen. Jede der Verteilstrategien 102-104 berücksichtigt eine Vielzahl der dem Fahrerassistenzsystem 86 zugänglichen Informationen 91-93, wobei diese Informationen zumindest die Informationen "Durchsatzparameter" 105, "Material- oder Wurfeigenschaften" 106, "Maschinenparameter"107 und "Umgebungsbedingungen" 108 umfassen.

Der durchsatzabhängige Einfluss auf die Verteilung des Gutstrangs 28 auf dem Boden 26 wird dann hinreichend gut erfasst, wenn die Information "Durchsatzparameter" 105 einen oder mehrere der durchsatzrelevanten Parameter 109 Korndurchsatz, Schichthöhe in einem dem Mähdrescher 2 zugeordneten Schrägförderer 4, Antriebsmotorauslastung, Antriebsleistungsbedarf der Zerkleinerungseinrichtung 23, Antriebsleistungsbedarf der Verteileinrichtungen 108 und/oder Quer- und Längsverteilung des Gutstrangs 28 in der Zerkleinerungseinrichtung 23 umfasst. Je nach Ausstattung des Mähdreschers 2 kann die Verteileinrichtung 110 einen Radialverteiler 29, Spreufördereinrichtungen 31 und/oder eine Auswurfhaube 42 umfassen.

Der wurfeigenschaftsabhängige Einfluss auf die Gutverteilung auf dem Boden 26 wird dann gut erfasst, wenn die Information "Material- und Wurfeigenschaften" 106 einen oder mehrere der wurfeigenschaftsrelevanten Parameter 111 Strohfeuchte, Häcksellänge, Aufspleißung, Gutdichte, Zähigkeit und Fruchtart umfasst.

Der auf die Zerkleinerungseinrichtung 23 bezogene maschinenparameterabhängige Einfluss auf die Verteilung wird dann hinreichend gut erfasst, wenn die Zerkleinerungseinrichtung 23 als Strohhäcksler 22 ausgeführt ist und der Gutstrang 28 im Strohhäcksler 22 im Zusammenwirken von umlaufenden Häckselmessern 45 mit ortsfesten Gegenmessern 46, einer oder mehreren Gegenschneiden 53 und einer oder mehreren Reibleisten 50 zerkleinert wird und die Information "Maschinenparameter" 107 einen oder mehrere der maschinenrelevanten Parameter 112 Anzahl und Position der Reibleisten 50, der Gegenmesser 48, der Gegenschneiden 53 sowie Verschleißparameter der Häckselmesser 45 und Drehzahlparameter der Häckselwelle 44 umfasst.

Ist die Verteileinrichtung 110 als Radialverteiler 29 ausgebildet, der zumindest auslenkbare Streubleche 67, 68 und ein oder mehrere Wurfgebläse 55 umfasst wird der maschinenparameterabhängige Einfluss auf die Verteilung des Gutstranges 28 auf dem Boden 26 dann hinreichend gut erfasst, wenn die Information "Maschinenparameter" 107 einen oder mehrere der maschinenrelevanten Parameter 112 Auslenkung, Pendelfrequenz und Verteilkurve der Streubleche 67, 68, Drehzahlparameter der Wurfgebläse 55 und vorgeschalteter umlaufender Arbeitsorgane des Mähdreschers 2 umfasst. Ist die Verteileinrichtung 110 hingegen als Spreuwurfgebläse 32 oder Spreuverteiler 33 ausgebildet beschränkt sich der maschinenrelevante Parameter 112 zumindest auf die Drehzahl der dem Spreuwurfgebläse 32 oder dem Spreuverteiler 33 zugeordneten Wurfgebläse 82, 87. Wird die den Gutstrang 28 auf dem Boden 26 verteilende Verteileinrichtung 110 als mit Gutleitschienen 77 besetzte Auswurfhaube 42 ausgebildet umfasst der maschinenrelevante Parameter 112 zumindest die Ausrichtung der Gutleitschienen 77 in der Auswurfhaube 42.

Der umgebungsabhängige Einfluss auf die Verteilung des Gutstrangs 28 auf dem Boden 26 wird dann hinreichend gut erfasst, wenn die Information "Umgebungsbedingungen" 108 einen oder mehrere der umgebungsrelevanten Parameter 113 Luftfeuchte- und Lufttemperaturparameter, Windparameter wie Windgeschwindigkeit und Windrichtung sowie Hangneigungsparameter umfasst.

In erfindungsgemäßer Weise arbeitet das Fahrerassistenzsystem 98 in einem nächsten Menüschritt 114 die jeweilige Verteilstrategie 100 unter Berücksichtigung der verfügbaren Informationen 115 und in der Recheneinheit 90 hinterlegter Kennlinien 116 ab, sodass sich schließlich eine Optimierung der Qualitätskriterien Gutverteilung 117a, Häckselqualität 117b und Energiebedarf 117c ergibt. In einem Ergebnismenüschritt 118 wird schließlich das durch die jeweilige Verteilstrategie 102-104 optimierte Qualitätskriterium 117a-c überprüft, wobei die Überprüfung direkt und indirekt erfolgt.

Bei Abarbeitung der Verteilstrategie "gleichmäßige Gutverteilung" 102 wird die direkte Überprüfung der Verteilung des aus dem Mähdrescher 2 austretenden Gutstranges 28 auf dem Boden 26 durch direkte Sensierung der Verteilung, etwa mittels an sich bekannter Kamera- oder Laserssysteme bewirkt. Die indirekte Erfassung erfolgt beispielsweise durch Abarbeitung der in der Recheneinheit 90 hinterlegten Kennlinienfelder 116.

In analoger Weise wird bei Abarbeitung der Verteilstrategie "Häckselqualität" 103 die direkte Erfassung des Ergebnisses durch Gutstromdetektion mittels an sich bekannter Gutanalysesensoren, wie etwa NIR-Sensoren, bewirkt. Die indirekte Erfassung erfolgt durch Abarbeitung eines in der Recheneinheit 90 hinterlegten Häckselqualitätsmodells 119, wobei das Häckselqualitätsmodell 119 beispielsweise die Häcksellänge in Abhängigkeit von detektierten Ernteguteigenschaften anpasst.

Bei Abarbeitung der Verteilstrategie "Energieeffizienz" 104 erfolgt die direkte Erfassung des Ergebnisses durch Drehmoment- und/oder Drehzahl- und/oder Motorauslastungsmessung. Die indirekte Erfassung erfolgt durch Abarbeitung eines in der Recheneinheit 90 hinterlegten Energieeffizienzmodells 120, wobei das Energieeffizienzmodell 120 in Analogie zum Häckselqualitätsmodell 119 den Antriebsenergiebedarf in Abhängigkeit von Ernteguteigenschaften variiert.

Die Optimierung der Qualitätsparameter Häckselqualität 117b und Energiebedarf 117c können auch dadurch noch verbessert werden, dass die in dem Fahrerassistenzsystem 98 hinterlegten Verteilstrategien "Häckselqualität" 103 und "Energieeffizienz" 104 miteinander kombiniert oder bilanziert werden. Hintergrund ist, dass die Qualitätsparameter Häckselqualität 117b und Energiebedarf 117c gegenläufige Tendenz aufweisen, da der Energiebedarf umso höher ist, je feiner der Gutstrang 28 eine schnelle Verrottung begünstigend zerkleinert wird. Eine vorteilhafte Weiterbildung der Erfindung ergibt sich in diesem Zusammenhang, wenn der Bediener 39 des Mähdreschers 2 Grenzwerte 121 für Häckselqualität 117b und Energiebedarf 117c festlegen und die Priorisierung einer der Verteilstrategien "Häckselqualität" 103 und "Energieeffizienz" 104 oder eine Änderung der Gewichtung dieser Verteilstrategien 100 vornehmen kann.

In einem weiteren Menüschritt 122 bewirkt das Fahrerassistenzsystem 98 schließlich unter Berücksichtigung der Vorgaben des Bedieners 39 und den hinterlegten Kennlinien 116, 119, 120 eine Änderung von Maschinenparameter 107. Schließlich kann der Optimierungsvorgang nach Art einer Regelschleife 123 zyklisch wiederholt werden, wobei die zyklische Wiederholung entweder automatisch erfolgt oder vom Bediener 39 ausgelöst wird.

**Bezugszeichenliste:**

| | | | |
|---|---|---|---|
| 1 | landwirtschaftliche Arbeitsmaschine | 31 | Spreufördereinrichtung |
| 2 | Mähdrescher | 32 | Spreuwurfgebläse |
| 3 | Getreideschneidwerk | 33 | Spreuverteiler |
| 4 | Schrägförderer | 34 | Spreu |
| 5 | Erntegutstrom | 35 | rückwärtiger Bereich |
| 6 | Dreschkorb | 36 | Fahrzeugkabine |
| 7 | Dreschorgan | 37 | Anzeigeeinheit |
| 8 | Umlenktrommel | 38 | Steuer- und Regeleinrichtung |
| 9 | Hordenschüttler | 39 | Bediener |
| 10 | Trenneinrichtung | 40 | Bussystem |
| 11 | Körner | 41 | Sensorsystem |
| 12 | Rücklaufboden | 42 | Auswurfhaube |
| 13 | Zuführboden | 43 | Pfeilrichtung |
| 14 | Siebebene | 44 | Häckslerwelle |
| 15 | Siebebene | 45 | Häckselmesser |
| 16 | Gebläse | 46 | Messerkamm |
| 17 | Reinigungseinrichtung | 47 | Stellmittel |
| 18 | Elevator | 48 | Gegenmesser |
| 19 | Korntank | 49 | Häckslerwandung |
| 20 | Körnerstrom | 50 | Reibleiste |
| 21 | Gehäuse | 51 | Stellmittel |
| 22 | Strohhäcksler | 52 | Umfangskreis |
| 23 | Zerkleinerungseinrichtung | 53 | Gegenschneide |
| 24 | Strohleitklappe | 54 | Stellmittel |
| 25 | Stroh | 55 | Wurfgebläse |
| 26 | Boden | 56 | Rotationsachse |
| 27 | Austrittsbereich | 57,58 | Pfeilrichtung |
| 28 | Gutstrang | 59 | Wurfschaufel |
| 29 | Radialverteiler | 60 | Scheibe |
| 30 | Austrittsbereich | 61 | Abdeckblech |
| 62 | Guttrennblech | 96 | Arbeitsorgansteuersignale |
| 63 | Spitze | 97 | Arbeitsorganparameter |
| 64,65 | Schenkel | 98 | Fahrerassistenzsystem |
| 66 | Teilummantelung | 99 | Häcksel- und Verteilautomat |
| 67,68 | Streublech | 100 | Verteilstrategie |
| 69,70 | Winkelhebel | 101 | erster Menüschritt |
| 71 | Drehachse | 102 | gleichmäßige Gutverteilung |
| 72 | Koppelmechanismus | 103 | Häckselqualität |
| 73 | Hubzylinder | 104 | Energieeffizienz |
| 74,75 | Abrisskante | 105 | Durchsatzparameter |
| 76 | Verkleidungshaube | 106 | Material- oder Wurfeigenschaften |
| 77 | Gutleitschiene | 107 | Maschinenparameter |
| 78 | Mittenbereich | 108 | Umgebungsbedingungen |
| 79 | Austrittsbereich | 109 | durchsatzrelevante Parameter |
| 80 | Stegblech | 110 | Verteileinrichtungen |
| 81 | Förderelement | 111 | wurfeigenschaftsrelevante Parameter |
| 82 | Wurfgebläse | 112 | maschinenrelevante Parameter |
| 83 | vertikale Achse | 113 | umgebungsrelevanter Parameter |
| 84 | Verkleidung | 114 | weiterer Menüschritt |
| 85 | Öffnung | 115 | verfügbare Informationen |
| 86 | Förderelement | 116 | Kennlinie |
| 87 | Wurfgebläse | 117 | Qualitätskriterium |
| 88 | vertikale Achse | 118 | Ergebnismenüschritt |
| 89 | Verkleidung | 119 | Häckselqualitätsmodell |
| 90 | Recheneinheit | 120 | Energieeffizienzmodell |
| 91 | interne Informationen | 121 | Grenzwert |
| 92 | externe Informationen | 122 | Menüschritt |
| 93 | Informationen | 123 | Regelschleife |
| 94 | Ausgangssignale | | |
| 95 | Anzeigesteuersignale | n_{HW} | Drehzahl Häckslerwelle |

## Patentansprüche

1. Mähdrescher mit einem die Verteilung eines aus dem Mähdrescher austretenden Gutstranges auf dem Boden regelnden Fahrerassistenzsystem, welches über eine Recheneinheit und zumindest eine Anzeigeeinheit verfügt, wobei die Recheneinheit von maschineninternen Sensorsystemen generierte Informationen, externe Informationen und in der Recheneinheit hinterlegbare Informationen verarbeitet und der auf dem Boden zu verteilende Gutstrang im rückwärtigen Bereich des Mähdreschers eine Zerkleinerungs- und/oder Verteileinrichtung durchläuft, wobei das Fahrerassistenzsystem (98) zur Regelung der Verteilung des aus dem Mähdrescher (2) austretenden Gutstranges (28) auswählbare Verteilstrategien (100) umfasst, **dadurch gekennzeichnet, dass** die auswählbaren Verteilstrategien (100) zumindest eine oder mehrere der Verteilstrategien "gleichmäßige Gutverteilung" (102), "Häckselqualität" (103) und "Energieeffizienz" (104) umfassen, wobei das Fahrerassistenzsystem (98) die jeweilige Verteilstrategie (100) unter Berücksichtigung der verfügbaren Informationen (115) und in der Recheneinheit (90) hinterlegter Kennlinien (116, 119, 120) abarbeitet und eine Optimierung der Qualitätskriterien Gutverteilung (117a), Häckselqualität (117b) und Energiebedarf (117c) bewirkt.

2. Mähdrescher mit einem die Verteilung eines aus dem Mähdrescher austretenden Gutstranges auf dem Boden regelndes Fahrerassistenzsystem nach Anspruch 1,
**dadurch gekennzeichnet,**
**dass** die Verteilstrategie "gleichmäßige Gutverteilung" (102) eine Optimierung der Verteilung des Gutstranges (28) auf dem Boden (26) bewirkt.

3. Mähdrescher mit einem die Verteilung eines aus dem Mähdrescher austretenden Gutstranges auf dem Boden regelndes Fahrerassistenzsystem nach Anspruch 1,
**dadurch gekennzeichnet,**
**dass** die Verteilstrategie "Häckselqualität" (103) eine Optimierung der Zerkleinerung des Gutstranges (28) in der Zerkleinerungseinrichtung (23) bewirkt.

4. Mähdrescher mit einem die Verteilung eines aus dem Mähdrescher austretenden Gutstranges auf dem Boden regelndes Fahrerassistenzsystem nach Anspruch 1,
**dadurch gekennzeichnet,**
**dass** die Verteilstrategie "Energieeffizienz" (104) eine Optimierung des Energiebedarfs für die Zerkleinerung und Verteilung des Gutstranges (28) bewirkt.

5. Mähdrescher mit einem die Verteilung eines aus dem Mähdrescher austretenden Gutstranges auf dem Boden regelndes Fahrerassistenzsystem nach einem der vorhergehenden Ansprüche;
**dadurch gekennzeichnet,**
**dass** eine Verteilstrategie (100) oder eine Kombination aus mehreren Verteilstrategien (100) vom Bediener (39) des Mähdreschers (2) ausgewählt oder vom Fahrerassistenzsystem (98) vorgeschlagen wird.

6. Mähdrescher mit einem die Verteilung eines aus dem Mähdrescher austretenden Gutstranges auf dem Boden regelndes Fahrerassistenzsystem nach einem der vorhergehenden Ansprüche;
**dadurch gekennzeichnet,**
**dass** jede der Verteilstrategien (100) eine Vielzahl der in dem Fahrerassistenzsystem (98) zugänglichen Informationen (115) berücksichtigt, wobei diese Informationen zumindest die Informationen "Durchsatzparameter" (105), "Material- oder Wurfeigenschaften" (106), "Maschinenparameter" (107) und "Umgebungsbedingungen" (108) umfassen.

7. Mähdrescher mit einem die Verteilung eines aus dem Mähdrescher austretenden Gutstranges auf dem Boden regelndes Fahrerassistenzsystem nach Anspruch 6,
**dadurch gekennzeichnet,**
**dass** die Information "Durchsatzparameter" (105) einen oder mehrere der durchsatzrelevanten Parameter (109) Korndurchsatz, Schichthöhe in einem dem Mähdrescher (2) zugeordneten Schrägförderer (4), Antriebsmotorauslastung, Antriebsleistungsbedarf der Zerkleinerungseinrichtung (23), Antriebsleistungsbedarf der Verteileinrichtungen (110) und/oder Quer- und Längsverteilung des Gutstrangs (28) in der Zerkleinerungseinrichtung (23) umfasst.

8. Mähdrescher mit einem die Verteilung eines aus dem Mähdrescher austretenden Gutstranges auf dem Boden regelndes Fahrerassistenzsystem nach Anspruch 6,
**dadurch gekennzeichnet,**
**dass** die Information "Material- und Wurfeigenschaften" (106) einen oder mehrere der wurfeigenschaftsrelevanten Parameter (111) Strohfeuchte, Häcksellänge, Aufspleißung, Gutdichte, Zähigkeit und Fruchtart umfasst.

9. Mähdrescher mit einem die Verteilung eines aus dem Mähdrescher austretenden Gutstranges auf dem Boden regelndes Fahrerassistenzsystem nach Anspruch 6,
**dadurch gekennzeichnet,**
**dass** die Zerkleinerungseinrichtung als Strohhäcksler (22) ausgeführt ist und der Gutstrang (28) im Strohhäcksler (22) im Zusammenwirken von umlaufenden Häckselmessern (45) mit ortsfesten Gegenmessern (48), zumindest einer Gegenschneide (53) und einer oder mehreren Reibleisten (50) zerkleinert wird und die Information "Maschinenparameter" (107) einen oder mehrere der maschinenrelevanten Parameter (112) Anzahl und Position der Reibleisten (50), der Gegenmesser (48), der Gegenschneiden (53) sowie Verschleißparameter der Häckselmesser (45) und Drehzahlparameter der Häckslerwelle (44) umfasst.

10. Mähdrescher mit einem die Verteilung eines aus dem Mähdrescher austretenden Gutstranges auf dem Boden regelndes Fahrerassistenzsystem nach Anspruch 6,
**dadurch gekennzeichnet,**
**dass** die den Gutstrang (28) auf dem Boden (26) verteilende Verteileinrichtung (110) als Radialverteiler (29) ausgebildet ist und zumindest auslenkbare Streubleche (67, 68) und ein oder mehrere Wurfgebläse (55) umfasst und die Information "Maschinenparameter" (107) einen oder mehrere der maschinenrelevanten Parameter (112) Auslenkung, Pendelfrequenz und Verteilkurve der Streubleche (67, 68), Drehzahlparameter der Wurfgebläse (55) und vorgeschalteter umlaufender Arbeitsorgane des Mähdreschers (2) umfasst.

11. Mähdrescher mit einem die Verteilung eines aus dem Mähdrescher austretenden Gutstranges auf dem Boden regelndes Fahrerassistenzsystem nach Anspruch 6,
**dadurch gekennzeichnet,**
**dass** die Verteileinrichtung (110) als Spreuwurfgebläse (32) oder Spreuverteiler (33) ausgebildet ist und der maschinenrelevante Parameter (107) zumindest die Drehzahl der dem Spreuwurfgebläse (32) oder dem Spreuverteiler (33) zugeordneten Wurfgebläse (55, 87) ist.

12. Mähdrescher mit einem die Verteilung eines aus dem Mähdrescher austretenden Gutstranges auf dem Boden regelndes Fahrerassistenzsystem nach Anspruch 6,
**dadurch gekennzeichnet,**
**dass** die den Gutstrang (28) auf dem Boden (26) verteilende Verteileinrichtung (110) als mit Gutleitschienen (77) besetzte Auswurfhaube (42) ausgebildet ist und der maschinenrelevante Parameter (107) zumindest die Ausrichtung der Gutleitschienen (77) umfasst.

13. Mähdrescher mit einem die Verteilung eines aus dem Mähdrescher austretenden Gutstranges auf dem Boden regelndes Fahrerassistenzsystem nach Anspruch 6,
**dadurch gekennzeichnet,**
**dass** die Information "Umgebungsbedingungen" (108) Luftfeuchte- und Lufttemperaturparameter, Windparameter und Hangneigungsparameter umfasst.

14. Mähdrescher mit einem die Verteilung eines aus dem Mähdrescher austretenden Gutstranges auf dem Boden regelndes Fahrerassistenzsystem nach Anspruch 1,
**dadurch gekennzeichnet,**
**dass** in einem Ergebnismenüschritt (118) das durch die jeweilige Verteilstrategie (100) optimierte Qualitätskriterium (117a-c) überprüft wird, wobei die Überprüfung entweder direkt und indirekt erfolgt.

15. Mähdrescher mit einem die Verteilung eines aus dem Mähdrescher austretenden Gutstranges auf dem Boden regelndes Fahrerassistenzsystem nach Anspruch 14,
**dadurch gekennzeichnet,**
**dass** das Fahrerassistenzsystem (98) das Ergebnis der Verteilstrategie "gleichmäßige Gutverteilung" (102) direkt oder indirekt erfasst, wobei die direkte Erfassung durch Sensierung der Verteilung des aus dem Mähdrescher (2) austretenden Gutstranges (28) auf dem Boden (26) und die indirekte Erfassung durch Abarbeitung in der Recheneinheit (90) hinterlegter Kennlinienfelder (116) erfolgt.

16. Mähdrescher mit einem die Verteilung eines aus dem Mähdrescher austretenden Gutstranges auf dem Boden regelndes Fahrerassistenzsystem nach Anspruch 14,
**dadurch gekennzeichnet,**
**dass** das Fahrerassistenzsystem (98) das Ergebnis der Verteilstrategie "Häckselqualität" (103) direkt oder indirekt erfasst, wobei die direkte Erfassung durch Gutstromdetektion und die indirekte Erfassung durch Abarbeitung eines in der Recheneinheit (90) hinterlegten Häckselqualitätsmodells (119) erfolgt.

17. Mähdrescher mit einem die Verteilung eines aus dem Mähdrescher austretenden Gutstranges auf dem Boden regelndes Fahrerassistenzsystem nach Anspruch 14,
**dadurch gekennzeichnet,**
**dass** das Fahrerassistenzsystem (98) das Ergebnis der Verteilstrategie "Energieeffizienz" (104) direkt oder indirekt erfasst, wobei die direkte Erfassung durch Drehmoment- und/oder Drehzahl- und/oder Motorauslastungsmessung und die indirekte Erfassung durch Abarbeitung eines in der Recheneinheit (90) hinterlegten Energieeffizienzmodells (120) erfolgt.

18. Mähdrescher mit einem die Verteilung eines aus dem Mähdrescher austretenden Gutstranges auf dem Boden regelndes Fahrerassistenzsystem nach einem der vorhergehenden Ansprüche;
**dadurch gekennzeichnet,**
**dass** die in dem Fahrerassistenzsystem (98) hinterlegten Verteilstrategien "Häckselqualität" (103) und "Energieeffizienz" (104) miteinander kombinier- und bilanzierbar sind.

19. Mähdrescher mit einem die Verteilung eines aus dem Mähdrescher austretenden Gutstranges auf dem Boden regelndes Fahrerassistenzsystem nach Anspruch 18,
**dadurch gekennzeichnet,**
**dass** der Bediener (39) des Mähdreschers (2) Grenzwerte für Häckselqualität (117b) und Energiebedarf (117c) definieren und die Priorisierung einer der Verteilstrategien "Häckselqualität" (103) und "Energieeffizienz" (104) oder eine Änderung der Gewichtung dieser Verteilstrategien (103, 104) vornehmen kann.

20. Mähdrescher mit einem die Verteilung eines aus dem Mähdrescher austretenden Gutstranges auf dem Boden regelndes Fahrerassistenzsystem nach den Ansprüche 18 und 19,
**dadurch gekennzeichnet,**
**dass** das Fahrerassistenzsystem (98) aus den Vorgaben des Bedieners (39) und den hinterlegten Kennlinien (116, 119, 120) eine Änderung der Maschinenparameter (107) bewirkt.

## Claims

1. A combine harvester with a driver assistance system which controls the distribution of a stream of material being discharged onto the ground from the combine harvester, which is provided with a processing unit and at least one display unit, wherein the processing unit processes information generated by sensor systems within the machine, external information and information which can be stored in the processing unit, and the stream of material to be distributed on the ground passes through a comminuting and/or distributing device in the rearward region of the combine harvester, wherein
the driver assistance system (98) comprises selectable distribution strategies (100) for controlling the distribution of the stream of material (28) being discharged from the combine harvester (2), **characterized in that** the selectable distribution strategies (100) comprise at least one or more of the distribution strategies "uniform material distribution" (102), "chop quality" (103) and "energy efficiency" (104), wherein the driver assistance system (98) executes the respective distribution strategy (100) taking into consideration the available information (115) and characteristics (116, 119, 120) stored in the processing unit (90) and implements an optimisation of the material distribution (117a), chop quality (117b) and energy requirement (117c) quality criteria.

2. The combine harvester with a driver assistance system which controls the distribution of a stream of material being discharged onto the ground from the combine harvester according to claim 1,
**characterized in that**
the "uniform material distribution" (102) distribution strategy implements an optimisation of the distribution of the stream of material (28) on the ground (26).

3. The combine harvester with a driver assistance system which controls the distribution of a stream of material being discharged onto the ground from the combine harvester according to claim 1,
**characterized in that**
the "chop quality" (103) distribution strategy implements an optimisation of the comminution of the stream of material (28) in the comminuting device (23).

4. The combine harvester with a driver assistance system which controls the distribution of a stream of material being discharged onto the ground from the combine harvester according to claim 1,
**characterized in that**
the "energy efficiency" (104) distribution strategy implements an optimisation of the energy requirement for the comminution and distribution of the stream of material (28).

5. The combine harvester with a driver assistance system which controls the distribution of a stream of material being discharged onto the ground from the combine harvester according to one of the preceding claims,
**characterized in that**
a distribution strategy (100) or a combination of several distribution strategies (100) is selected by the operator (39) of the combine harvester (2) or is proposed by the driver assistance system (98).

6. The combine harvester with a driver assistance system which controls the distribution of a stream of material being discharged onto the ground from the combine harvester according to one of the preceding claims,
**characterized in that**
each of the distribution strategies (100) takes into consideration a plurality of accessible items of information (115) in the driver assistance system (98), wherein these items of information comprise at least the information "throughput parameters" (105), "material properties or spread properties" (106), "machine parameters" (107) and "environmental conditions" (108).

7. The combine harvester with a driver assistance system which controls the distribution of a stream of material being discharged onto the ground from the combine harvester according to claim 6,
**characterized in that**
the "throughput parameters" (106) information comprises one or more parameters (109) which are relevant to throughput, namely grain throughput, layer height in an inclined conveyor (4) associated with the combine harvester (2), propulsion engine load, driving power requirement for the comminuting device (23), driving power requirement for the distribution devices (110) and/or transverse and longitudinal distribution of the stream of material (28) in the comminuting device (23).

8. The combine harvester with a driver assistance system which controls the distribution of a stream of material being discharged onto the ground from the combine harvester according to claim 6,
**characterized in that**
the "material properties and spreading properties" (106) information comprises one or more parameters (111) which are relevant to spreading properties, namely straw moisture, chop length, fanning, material density, toughness and type of crop.

9. The combine harvester with a driver assistance system which controls the distribution of a stream of material being discharged onto the ground from the combine harvester according to claim 6,
**characterized in that**
the comminuting device is configured as a straw chopper (22) and the stream of material (28) is comminuted in the straw chopper (22) by the cooperation of rotating chopping blades (45) with stationary counter blades (48), at least one counter cutter (53) and one or more rasp bars (50) and the "machine parameters" (107) information comprises one or more parameters (112) which are relevant to the machine, namely the number and position of the rasp bars (50), the counter blades (48), the counter cutters (53) as well as wear parameters for the chopping blade (45) and rotational speed parameters for the chopper shaft (44).

10. The combine harvester with a driver assistance system which controls the distribution of a stream of material being discharged onto the ground from the combine harvester according to claim 6,
**characterized in that**
the distribution device (110) which distributes the stream of material (28) on the ground (26) is configured as a radial distributor (29) and comprises, at the least, movable deflector plates (67, 68) and one or more spreader blowers (55) and the "machine parameters" (107) information comprises one or more parameters (112) which are relevant to the machine, namely deflection, oscillation frequency and distribution curve for the deflector plates (67, 68), rotational speed parameters for the spreader blower (55) and upstream rotary working assemblies of the combine harvester (2).

11. The combine harvester with a driver assistance system which controls the distribution of a stream of material being discharged onto the ground from the combine harvester according to claim 6,
**characterized in that**
the distribution device (110) is configured as a chaff blower (32) or as a chaff spreader (33) and the parameter (107) which is relevant to the machine is, at the least, the rotational speed of the spreader blower (55, 87) associated with the chaff blower (32) or the chaff spreader (33).

12. The combine harvester with a driver assistance system which controls the distribution of a stream of material being discharged onto the ground from the combine harvester according to claim 6,
**characterized in that**
the distribution device (110) distributing the stream of material (28) on the ground (26) is configured as a discharge hood (42) provided with material guide tracks (77) and the parameter (107) which is relevant to the machine comprises at least the orientation of the material guide tracks (77).

13. The combine harvester with a driver assistance system which controls the distribution of a stream of material being discharged onto the ground from the combine harvester according to claim 6,
**characterized in that**
the "environmental conditions" (108) information comprises air moisture parameters and air temperature parameters, wind parameters and slope gradient parameters.

14. The combine harvester with a driver assistance system which controls the distribution of a stream of material being discharged onto the ground from the combine harvester according to claim 1,
**characterized in that**
in a result menu step (118), the quality criterion (117a-c) optimised by the respective distribution strategy (100) is checked, wherein the check is carried out either directly or indirectly.

15. The combine harvester with a driver assistance system which controls the distribution of a stream of material being discharged onto the ground from the combine harvester according to claim 14,
**characterized in that**
the driver assistance system (98) detects the result of the "uniform material distribution" (102) distribution strategy directly or indirectly, wherein the direct detection is carried out by sensing the distribution of the stream of material (28) being discharged onto the ground (26) from the combine harvester (2) and the indirect detection is carried out by executing performance maps (116) stored in the processing unit (90).

16. The combine harvester with a driver assistance system which controls the distribution of a stream of material being discharged onto the ground from the combine harvester according to claim 14,
**characterized in that**
the driver assistance system (98) detects the result of the "chop quality" (103) distribution strategy directly or indirectly, wherein the direct detection is carried out by detection of the stream of material and the indirect detection is carried out by executing a chop quality model (119) stored in the processing unit (90).

17. The combine harvester with a driver assistance system which controls the distribution of a stream of material being discharged onto the ground from the combine harvester according to claim 14,
**characterized in that**
the driver assistance system (98) detects the result of the "energy efficiency" (104) distribution strategy directly or indirectly, wherein the direct detection is carried out by measurement of the torque and/or rotational speed and/or engine load and the indirect detection is carried out by executing an energy efficiency model (120) stored in the processing unit (90).

18. The combine harvester with a driver assistance system which controls the distribution of a stream of material being discharged onto the ground from the combine harvester according to one of the preceding claims,
**characterized in that**
the "chop quality" (103) and "energy efficiency" (104) distribution strategies stored in the driver assistance system (98) can be combined and balanced with one another.

19. The combine harvester with a driver assistance system which controls the distribution of a stream of material being discharged onto the ground from the combine harvester according to claim 18,
**characterized in that**
the operator (39) of the combine harvester (2) defines thresholds for the chop quality (117b) and energy requirement (117c) and can undertake the prioritisation of one of the distribution strategies, "chop quality" (103) and "energy efficiency" (104), or can change the weighting of these distribution strategies (103, 104).

20. The combine harvester with a driver assistance system which controls the distribution of a stream of material being discharged onto the ground from the combine harvester according to claims 18 and 19,
**characterized in that**
the driver assistance system (98) implements a variation in the machine parameters (107) from the specifications of the operator (39) and the stored characteristics (116, 119, 120).

## Revendications

1. Moissonneuse-batteuse comprenant un système d'assistance à la conduite qui régule l'épandage sur le sol d'une nappe de produit sortant de la moissonneuse-batteuse et qui dispose d'une unité de calcul et d'au moins une unité d'affichage, l'unité de calcul traitant des informations générées par des systèmes de capteurs internes à la machine, des informations externes et des informations enregistrables dans l'unité de calcul, et la nappe de produit à épandre sur le sol traversant dans la zone arrière de la moissonneuse-batteuse un équipement de broyage et/ou d'épandage, le système d'assistance à la conduite (98) incluant des stratégies d'épandage sélectionnables (100) pour réguler l'épandage de la nappe de produit (28) sortant de la moissonneuse-batteuse (2), **caractérisée en ce que** les stratégies d'épandage sélectionnables (100) incluent au moins une ou plusieurs des stratégies d'épandage « distribution de produit régulière » (102), « qualité de hachage » (103) et « efficience énergétique » (104), le système d'assistance à la conduite (98) exécutant la stratégie d'épandage respective (100) en tenant compte des informations disponibles (115) et de courbes caractéristiques (116, 119, 120) enregistrées dans l'unité de calcul (90) et induisant une optimisation des critères de qualité épandage de produit (117a), qualité de hachage (117b) et besoins en énergie (117c).

2. Moissonneuse-batteuse comprenant un système d'assistance à la conduite qui régule l'épandage sur le sol d'une nappe de produit sortant de la moissonneuse-batteuse selon la revendication 1, **caractérisée en ce que** la stratégie d'épandage « distribution de produit régulière » (102) induit une optimisation de l'épandage de la nappe de produit (28) sur le sol (26).

3. Moissonneuse-batteuse comprenant un système d'assistance à la conduite qui régule l'épandage sur le sol d'une nappe de produit sortant de la moissonneuse-batteuse selon la revendication 1, **caractérisée en ce que** la stratégie d'épandage « qualité de hachage » (103) induit une optimisation du broyage de la nappe de produit (28) dans l'équipement de broyage (23).

4. Moissonneuse-batteuse comprenant un système d'assistance à la conduite qui régule l'épandage sur le sol d'une nappe de produit sortant de la moissonneuse-batteuse selon la revendication 1, **caractérisée en ce que** la stratégie d'épandage « efficience énergétique » (104) induit une optimisation des besoins en énergie pour le broyage et l'épandage de la nappe de produit (28).

5. Moissonneuse-batteuse comprenant un système d'assistance à la conduite qui régule l'épandage sur le sol d'une nappe de produit sortant de la moissonneuse-batteuse selon la revendication selon une des revendications précédentes, **caractérisée en ce qu'**une stratégie d'épandage (100) ou une combinaison de plusieurs stratégies d'épandage (100) est sélectionnée par l'utilisateur (39) de la moissonneuse-batteuse (2) ou proposée par le système d'assistance à la conduite (98).

6. Moissonneuse-batteuse comprenant un système d'assistance à la conduite qui régule l'épandage sur le sol d'une nappe de produit sortant de la moissonneuse-batteuse selon une des revendications précédentes, **caractérisée en ce que** chacune des stratégies d'épandage (100) prend en compte une pluralité des informations (115) accessibles dans le système d'assistance à la conduite (98), ces informations incluant au moins les informations « paramètres de débit » (105), « propriétés de matériel ou d'éparpillage » (106), « paramètres machine » (107) et « conditions environnementales » (108).

7. Moissonneuse-batteuse comprenant un système d'assistance à la conduite qui régule l'épandage sur le sol d'une nappe de produit sortant de la moissonneuse-batteuse selon la revendication 6., **caractérisée en ce que** l'information « paramètres de débit » (105) inclut un ou plusieurs des paramètres pertinents pour le débit (109) débit de grain, hauteur de couche dans un convoyeur incliné (4) associé à la moissonneuse-batteuse (2), charge au moteur d'entraînement, besoins de puissance d'entraînement de l'équipement de broyage (23), besoins de puissance d'entraînement des dispositifs d'épandage (110) et/ou répartition transversale et longitudinale de la nappe de produit (28) dans l'équipement de broyage (23).

8. Moissonneuse-batteuse comprenant un système d'assistance à la conduite qui régule l'épandage sur le sol d'une nappe de produit sortant de la moissonneuse-batteuse selon la revendication 6, **caractérisée en ce que** l'information « propriétés de matière et d'éparpillage » (106) inclut un ou plusieurs des paramètres pertinents pour les propriétés d'éparpillage (111) humidité de paille, longueur de hachage, fendage, densité de produit, ténacité et type de culture.

9. Moissonneuse-batteuse comprenant un système d'assistance à la conduite qui régule l'épandage sur le sol d'une nappe de produit sortant de la moissonneuse-batteuse selon la revendication 6, **caractérisée en ce que** l'équipement de broyage est conformé en hache-paille (22) et, dans le hache-paille (22), la nappe de produit (28) est broyée par la coopération de couteaux hacheurs rotatifs (45) avec des contre-couteaux fixes (48) au moins d'une contre-lame (53) et d'une ou plusieurs battes de friction (50), et l'information « paramètres machine » (107) inclut un ou plusieurs des paramètres pertinents pour la machine (112) nombre et position des battes de friction (50), des contre-couteaux (48), des contre-lames (53) ainsi que des paramètres d'usure des couteaux hacheurs (45) et des paramètres de vitesse de rotation de l'arbre de hache-paille (44).

10. Moissonneuse-batteuse comprenant un système d'assistance à la conduite qui régule l'épandage sur le sol d'une nappe de produit sortant de la moissonneuse-batteuse selon la revendication 6, **caractérisée en ce que** l'équipement d'épandage (110) épandant la nappe de produit (28) sur le sol (26) est conformé en épandeur radial (29) et inclut au moins des tôles d'éparpillage déviables (67, 68) et un ou plusieurs projecteurs soufflants (55) et l'information « paramètres machine » (107) inclut un ou plusieurs des paramètres pertinents pour la machine (112) déviation, fréquence pendulaire et courbe d'épandage des tôles d'éparpillage (67, 68), paramètres de vitesse de rotation des projecteurs soufflants (55) et d'organes de travail rotatifs amont de la moissonneuse-batteuse (2).

11. Moissonneuse-batteuse comprenant un système d'assistance à la conduite qui régule l'épandage sur le sol d'une nappe de produit sortant de la moissonneuse-batteuse selon la revendication 6, **caractérisée en ce que** l'équipement d'épandage (110) est conformé en projecteur soufflant de balle (32) ou en épandeur de balle (33) et le paramètre pertinent pour la machine (107) est au moins la vitesse de rotation des projecteurs soufflants (55, 87) associés au projecteur soufflant de balle (32) ou à l'épandeur de balle (33) .

12. Moissonneuse-batteuse comprenant un système d'assistance à la conduite qui régule l'épandage sur le sol d'une nappe de produit sortant de la moissonneuse-batteuse selon la revendication 6, **caractérisée en ce que** l'équipement d'épandage (110) épandant la nappe de produit (28) sur le sol (26) est conformé en capot de projection (42) muni de rails de guidage de produit (77) et le paramètre pertinent pour la machine (107) inclut au moins l'orientation des rails de guidage de produit (77).

13. Moissonneuse-batteuse comprenant un système d'assistance à la conduite qui régule l'épandage sur le sol d'une nappe de produit sortant de la moissonneuse-batteuse selon la revendication 6, **caractérisée en ce que** l'information « conditions environnementales » (108) inclut des paramètres d'humidité de l'air et de température de l'air, des paramètres de vent et des paramètres de dévers.

14. Moissonneuse-batteuse comprenant un système d'assistance à la conduite qui régule l'épandage sur le sol d'une nappe de produit sortant de la moissonneuse-batteuse selon la revendication 1, **caractérisée en ce que**, dans une étape de menu de résultats (118), le critère de qualité (117a-c) optimisé par l'intermédiaire de la stratégie d'épandage respective (100) est contrôlé, le contrôle s'effectuant directement et indirectement.

15. Moissonneuse-batteuse comprenant un système d'assistance à la conduite qui régule l'épandage sur le sol d'une nappe de produit sortant de la moissonneuse-batteuse selon la revendication 14, **caractérisée en ce que** le système d'assistance à la conduite (98) détecte le résultat de la stratégie d'épandage « distribution de produit régulière » (102) directement ou indirectement, la détection directe s'effectuant par palpation de l'épandage sur le sol (26) de la nappe de produit sortant de la moissonneuse-batteuse (2) et la détection indirecte s'effectuant par exécution de diagrammes de courbes caractéristiques (116) enregistrés dans l'unité de calcul (90).

16. Moissonneuse-batteuse comprenant un système d'assistance à la conduite qui régule l'épandage sur le sol d'une nappe de produit sortant de la moissonneuse-batteuse selon la revendication 14, **caractérisée en ce que** le système d'assistance à la conduite (98) détecte le résultat de la stratégie d'épandage « qualité de hachage » (103) directement ou indirectement, la détection directe s'effectuant par détection de flux de produit et la détection indirecte s'effectuant par exécution d'un modèle de qualité de hachage (119) enregistré dans l'unité de calcul (90).

17. Moissonneuse-batteuse comprenant un système d'assistance à la conduite qui régule l'épandage sur le sol d'une nappe de produit sortant de la moissonneuse-batteuse selon la revendication 14, **caractérisée en ce que** le système d'assistance à la conduite (98) détecte le résultat de la stratégie d'épandage « efficience énergétique » (104) directement ou indirectement, la détection directe s'effectuant par mesure de moment de rotation et/ou de vitesse de rotation et/ou de charge au moteur et la détection indirecte s'effectuant par exécution d'un modèle d'efficience énergétique (120) enregistré dans l'unité de calcul (90).

18. Moissonneuse-batteuse comprenant un système d'assistance à la conduite qui régule l'épandage sur le sol d'une nappe de produit sortant de la moissonneuse-batteuse selon une des revendications précédentes, **caractérisée en ce que** les stratégies d'épandage « modèle de qualité de hachage » (103) et « efficience énergétique » (104) enregistrées dans le système d'assistance à la conduite (98) sont combinables et comptabilisables.

19. Moissonneuse-batteuse comprenant un système d'assistance à la conduite qui régule l'épandage sur le sol d'une nappe de produit sortant de la moissonneuse-batteuse selon la revendication 18, **caractérisée en ce que** l'utilisateur (39) de la moissonneuse-batteuse (2) peut définir des valeurs limites pour la qualité de hachage (117b) et les besoins en énergie (117c) et effectuer la priorisation d'une des stratégies d'épandage « qualité de hachage » (103) et « efficience énergétique » (104) ou une modification de la pondération de ces stratégies d'épandage (103, 104) .

20. Moissonneuse-batteuse comprenant un système d'assistance à la conduite qui régule l'épandage sur le sol d'une nappe de produit sortant de la moissonneuse-batteuse selon la revendication 18 et 19, **caractérisée en ce que** le système d'assistance à la conduite (98) induit une modification des paramètres machine (107) à partir des prescriptions de l'utilisateur (39) et des courbes caractéristiques enregistrées (116, 119, 120).
